Europäisches Patentamt

European Patent Office

Office européen des brevets

(11) Veröffentlichungsnummer: **0 314 923**
**A1**

## (12) EUROPÄISCHE PATENTANMELDUNG

(21) Anmeldenummer: 88116272.1

(22) Anmeldetag: 01.10.88

(51) Int. Cl.⁴: **A01F 15/08** , **A01F 25/14** ,
**B65B 63/02** , **B65B 9/06**

(30) Priorität: 31.10.87 DE 3737020

(43) Veröffentlichungstag der Anmeldung:
**10.05.89 Patentblatt 89/19**

(84) Benannte Vertragsstaaten:
**DE FR GB IT NL**

(71) Anmelder: **DEERE & COMPANY**
**1 John Deere Road**
**Moline Illinois 61265(US)**

(72) Erfinder: **Giani, Angel Leonardo**
**67 Rue Folpersviller**
**F-57200 Sarreguemines(FR)**
Erfinder: **Magin, Ludwig**
**Keltenstrasse 22**
**D-6707 Schifferstadt(DE)**

(74) Vertreter: **Feldmann, Bernhard et al**
**DEERE & COMPANY European Office, Patent
Department Steubenstrasse 36-42 Postfach
503
D-6800 Mannheim 1(DE)**

(54) **Verfahren und vorrichtungen zum Umhüllen eines Presserzeugnisses.**

(57) Verfahren zum Umhüllen eines in einer mindestens einseitig offenen Preßkammer gefertigten Preßerzeugnisses

Preßerzeugnisse, insbesondere Erntegüter, die zu Silage verarbeitet werden sollen, müssen nach dem Stand der Technik zuerst einer Preßkammer (28) entnommen werden und mittels einer separaten Vorrichtung mit einer luftdichten Bedeckung (10) umhüllt werden.

Um sowohl die separate Vorrichtung als auch zusätzliche Arbeitsgänge einzusparen, wird eine Bedeckung (10) verwendet, deren Fläche mindestens der Oberfläche des Preßerzeugnisses (20) entspricht, wobei die den Stirnseiten des Preßerzeugnisses (20) entsprechenden Seitenteile (14) der Bedeckung (10) auf den der Mantelfläche des Preßerzeugnisses (20) entsprechenden Grundteil (12) gefaltet werden.

Direkt nach Abschluß des Preßvorgangs wird diese Bedeckung (10) in die Preßkammer (28) geführt, wobei die Seitenteile (12) an den Rand des Grundteils (12) geschoben und dort in der Art eines Wulstes mit der Bedeckung um das Preßerzeugnis (20) gewickelt werden.

Nach dem Austritt des Preßerzeugnisses (20) aus der Preßkammer (28) werden die Seitenteile (14) aus dem Wulst entfaltet und an ihren Außenkanten miteinander verbunden, um das Preßerzeugnis (20) luftdicht abzuschließen.

Diese Verfahren und die dazu verwendete Vorrichtung können insbesondere in der Landwirtschaft beim Pressen von Gras oder sonstigen Erntegütern verwendet werden. Es ist auch denkbar, andere gepreßte Erzeugnisse, wie Wolle, Stoffe, Papier und dergleichen derart zu verpacken.

## Verfahren und Vorrichtungen zum Umhüllen eines Preßerzeugnisses

Die Erfindung betrifft ein Verfahren und Vorrichtungen zum Umhüllen eines Preßerzeugnisses, insbesondere eines in einer Rechteck- oder einer Rundballenpresse gefertigten Erntegutballens, mit einer Bedeckung.

Es ist bekannt, Güter, wie etwa Heu, Stroh, Silage oder Baumwolle, in einer Presse zu verdichten und mit einer Umhüllung zu versehen, so daß diese Güter entweder gegen Umgebungseinflüsse geschützt sind oder im verdichteten Zustand gehalten werden. Derartige Maßnahmen sind auch in der Verpackungsindustrie beim Verpacken von Isoliermaterialien und anderen lose anfallenden Gütern wie Wolle, Stoffen und Papier bekannt.

Insbesondere in der Landwirtschaft entsteht zunehmend das Bedürfnis, Gras oder sonstiges Grünfutter, ohne es vorher trocknen zu lassen, zu pressen und es anschließend luftdicht zu umhüllen, so daß es zu Silage gären kann. Diese Maßnahme erspart die Anwendung von Silos und die damit einhergehenden Arbeitsschritte.

So geht aus der EP-A1-0 111 434 eine Maschine und ein Verfahren hervor, bei denen ein fertiges und bereits gebundenes Preßerzeugnis mittels eines an einem Ackerschlepper angebauten Frontladers aufgenommen und durch einen Trichter hindurch in einen Foliensack gesteckt wird, der, nachdem das Preßerzeugnis von dem Frontlader entnommen worden ist, zugebunden wird.

Abgesehen davon, daß es für die Durchführung dieses Verfahrens einer eigenen Maschine und einer separaten Fördereinrichtung, nämlich dem Ackerschlepper, bedarf, sind auch wieder zusätzliche Arbeitsschritte erforderlich, die den gesamten Umhüllungsvorgang verzögern und aufwendig machen.

Eine andere Umhüllungsmaschine (Zeitschrift: top agrar, 5/1987, Seite 90) ist derart ausgebildet, daß sie zwei angetriebene Walzen enthält, auf die ein ebenfalls gebundener und erzeugter Rundballen aufgelegt wird und diesen in Drehung um seine Längsachse versetzen. Während des Drehvorgangs umwickelt eine Bedienungsperson den Rundballen mit einer auf einer Rolle aufgewickelten Folienbahn.

Diese Umhüllungsmaschine weist ebenfalls die oben genannten Nachteile auf, und es ist eine größere Menge an Bedeckungsmaterial erforderlich, da sich sämtliche Lagen der Folie überlappen müssen. Ferner ist es von der Sorgfalt der Bedienungsperson abhängig, ob die Wicklung der Folie luftdicht ist oder nicht.

Zwar ist es auch bekannt (DE-A1-3 301 420), unmittelbar nach dem Preßvorgang in der Preßkammer einer Rundballenpresse mit dem Erntegut Folie von einer Rolle aus zuzuführen und sie um den Ballen zu wickeln; bei diesem Verfahren wird aber nur die Mantelfläche, hingegen nicht die Stirnflächen des Rundballens umhüllt. Diese Vorrichtung eignet sich demnach nicht zur Herstellung von Silage, sondern bietet nur einen Wetterschutz oder eine Umhüllung zum Zusammenhalten des Rundballens.

Die der Erfindung zugrunde liegende Aufgabe wird darin gesehen, ein Verfahren zu entwickeln, mit dem in einem Arbeitsgang eine Bedeckung, wie etwa Folie, unmittelbar nach dem Preßvorgang so auf das Preßerzeugnis aufgebracht wird, daß ohne die Zuhilfenahme weiterer Maschinen das Preßerzeugnis vollkommen umhüllt werden kann. Eine weitere Aufgabe ist es, die zur Durchführung des Verfahrens erforderlichen Mittel anzugeben.

Diese Aufgaben sind erfindungsgemäß durch die Lehren der Patentansprüche 1, 2, 5, 9 und 11 gelöst worden, wobei in den von ihnen abhängigen Patentansprüchen diese Lehren fortentwickelt sind.

Auf diese Weise ist die Bedeckung bereits um die Mantelfläche des Preßerzeugnisses gewickelt, wenn es die Preßkammer verläßt, und die den Stirnflächen zugeordneten Teile der Bedeckung sind so vorbereitet, d. h. zusammengefaltet, daß sie von einer Bedienungsperson nur noch nach außen gezogen und an den Seitenkanten miteinander verbunden werden müssen. Die Verbindung kann dort sowohl mittels eines separaten Klebebandes, mittels eines Klebers oder mittels einer Schnur erfolgen. Hierzu ist es jedoch weder erforderlich, daß das Preßerzeugnis angehoben, noch daß es in eine weitere Maschine eingegeben werden muß. Insbesondere bei Rundballen, möglicherweise auch bei Papierballen, ist dies entscheidend, da diese oft eine Masse von 700 kg und mehr aufweisen.

Zur Durchführung des erfindungsgemäßen Verfahrens eignet sich am besten eine Rundballenpresse, da es bei dieser nur einer zusätzlichen Vorrichtung bedarf, um die Bedeckung vorzubereiten und zuzuführen, bzw. zuzuleiten. Ist eine herkömmliche Rundballenpresse bereits mit einer Einrichtung zum Zuführen von Folie oder Netz zur Umhüllung der Mantelfläche versehen, dann ist nur noch erforderlich, die Rolle mit der herkömmlichen ungefalteten Bedeckung gegen die Rolle mit der gefalteten Bedeckung auszutauschen und die Vorrichtung zum Auseinanderfalten der Bedeckung anzubauen. Der Kosten- und Arbeitsaufwand ist also verhältnismäßig gering. Diese Erfindung erlaubt es auch, eine Rundballenpresse sowohl nach einem herkömmlichen wie auch nach dem erfindungsgemäßen Verfahren alternativ zu betreiben.

Die Erfindung eignet sich jedoch auch zur Anwendung an anderen Pressen; dort ist allerdings noch eine Einrichtung zum Drehen des Preßerzeugnisses vorzusehen, damit die Bedeckung um die Mantelfläche des Preßerzeugnisses gelegt werden kann.

Die Drehkörper sind vorteilhafterweise abgerundet, damit die Bedeckung von ihnen nur auseinandergefaltet, hingegen nicht beschädigt wird.

Durch die Verwendung einer Fördervorrichtung mit einer Starterwalze, einer Bremsrolle und einer Steuervorrichtung, die auf einem Bedienungsstand, z. B. dem eines Akkerschleppers, vorgesehen sein kann, kann der Zeitpunkt bestimmt werden, wann die Bedeckung in die Preßkammer eingeführt wird. Da das Auseinanderfalten der eingefalteten Seitenteile einen bestimmten Widerstand erzeugt, ist es von Vorteil, eine Starterwalze vorzusehen, die die Bedekkung in die Preßkammer hineinzieht und es nicht dem mehr oder weniger großen Kraftschluß einer ungezwungen in die Preßkammer eingeführten Bedeckung überläßt, ob und wann diese eingezogen wird.

Damit zum einen die Bedeckung das Preßerzeugnis ausreichend luftdicht abdecken kann, zum anderen aber beim Abziehen der Bedeckung von der Rolle nicht zuviel Material abgezogen wird, das beim Ausfalten der eingefalteten Teile hinderlich sein könnte, ist es zweckmäßig eine weitere Steuerung vorzusehen, die die Länge der Bedeckung pro Preßerzeugnis festlegt.

In der Zeichnung ist ein nachfolgend näher beschriebenes Ausführungsbeispiel der Erfindung dargestellt. Es zeigt

Figur 1 eine für die Durchführung eines erfindungsgemäßen Verfahrens gefaltete Bedeckung im Schnitt,

Figur 2 die Bedeckung aus Figur 1 in Draufsicht beim Ausfalten und in vereinfachter Darstellung,

Figur 3 eine Vorrichtung zum Ausfalten und Zuführen der Bedeckung in eine Preßkammer und

Figur 4 ein von der Bedeckung umhülltes Preßerzeugnis nach dem Verlassen der Preßkammer.

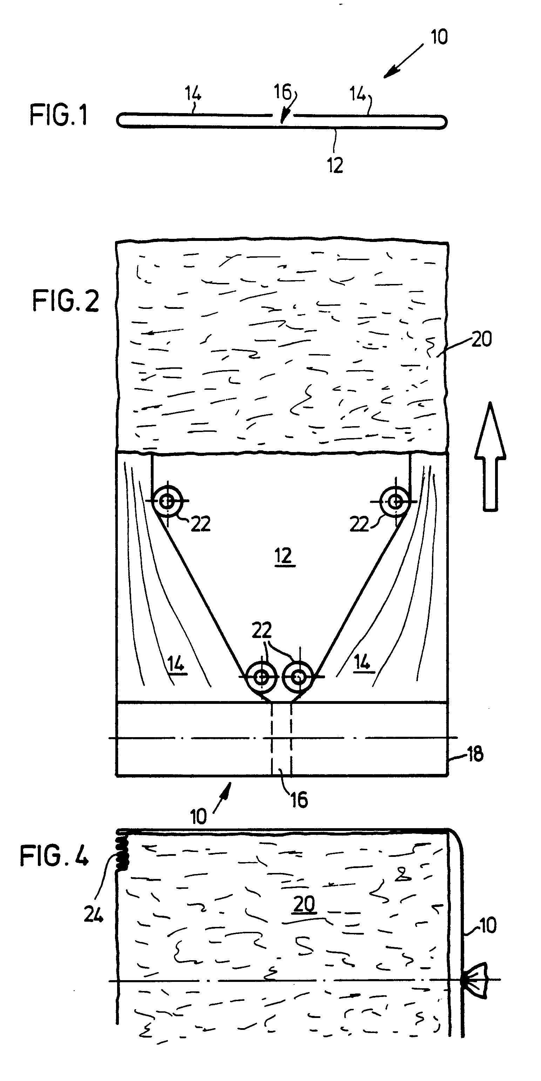

In Figur 1 ist in einem quer zu einer Bedeckung 10 verlaufenden Schnitt zu erkennen, daß die Bedeckung aus einem Grundteil 12 und zwei Seitenteilen 14 besteht, wobei die Seitenteile 14 umgeschlagen sind und auf dem Grundteil 12 zu liegen kommen. Die Seitenteile 14 reichen bei diesem Ausführungsbeispiel bis zur Mitte des Grundteils 12. Es ist aber abhängig von der Größe des zu umhüllenden Preßerzeugnisses wie weit die Seitenteile 14 den Grundteil 12 überlappen. Es ist möglich, daß die Seitenteile 14 nicht bis zur Mitte des Grundteils 12 reichen; genausogut können sie aber auch bis über die Mitte reichen und sich dort selbst überlappen, oder sie können mehrfach gefaltet sein. Jedenfalls ergibt sich zwischen den Endkanten der Seitenteile 14 eine Trennstelle 16.

Die Bedeckung 10 besteht normalerweise aus luftdichter Kunststoffolie; sie kann aber auch aus einem luftdurchlässigen Netz, aus einem verstärkten Papier oder dergleichen bestehen; dies ist abhängig von dem geplanten Verwendungszweck. Als Verwendungszweck kann die luftdichte Verpackung eines Erzeugnisses, wie bei der Silageherstellung, oder die ganzflächige Umhüllung zum Verhindern des Verlorengehens von Teilen des Preßerzeugnisses in Betracht kommen. Ebenfalls abhängig von der Einsatzart ist die Vorratsart der Bedeckung. So kann diese auf einer in Figur 1 nicht gezeigten Rolle aufgewickelt oder bereits im voraus auf eine bestimmte Länge zugeschnitten in einem Behälter geschichtet sein.

Die Größe, insbesondere die Breite, des Grundteils 12 der Bedeckung 10 entspricht der Größe der Mantelfläche des zu umhüllenden Preßerzeugnisses und die Größe der Seitenteile 14 entspricht mindestens der Größe der Stirnflächen des Preßerzeugnisses. Geht man davon aus, daß es sich bei dem Preßerzeugnis um einen runden, zylindrischen Teil handelt, z. B. um einen Rundballen aus Erntegut, dann entspricht die Breite der Seitenteile 14 mindestens dem Radius von dessen Stirnflächen.

Aus Figur 2 sind eine Rolle 18, ein Preßerzeugnis 20, mehrere Drehkörper 22 und die Bedeckung 10 zu ersehen. Aus dieser Figur ist zu entnehmen, wie die Bedeckung 10 in der Richtung eines seitlich angedeuteten Pfeils von der Rolle 18 abgezogen und zu dem Preßerzeugnis 20 geführt wird.

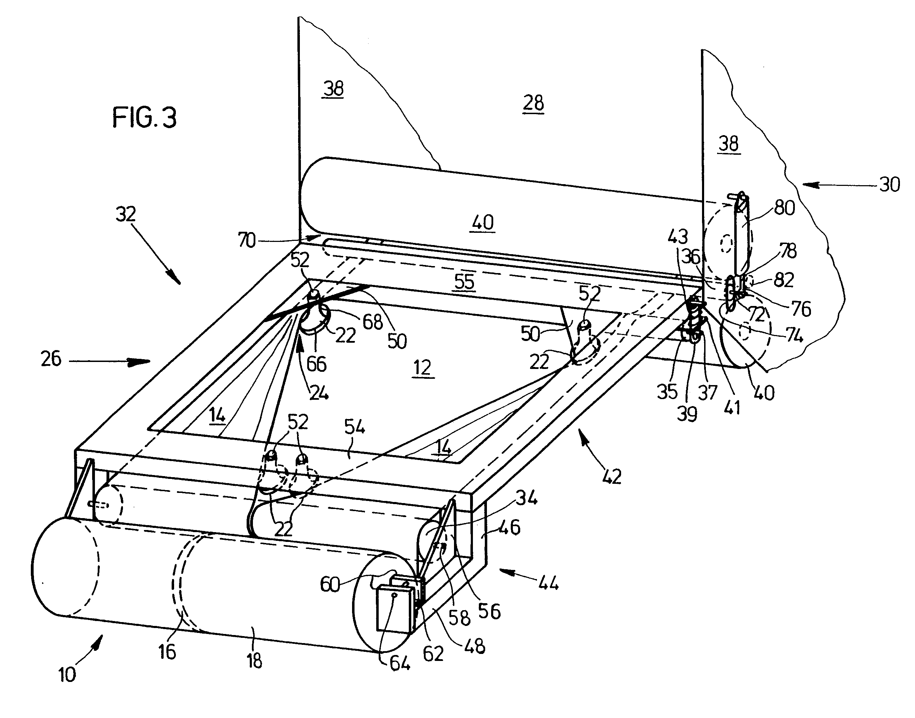

Die Rolle 18 und die Drehkörper 22 sind auf eine in Figur 3 näher gezeigte Weise gestaltet, was später eingehend beschrieben wird.

Es sind bei diesem Ausführungsbeispiel vier Drehkörper 22 vorgesehen, von denen sich zwei nahe der Rolle 18 und sowohl nahe als auch symmetrisch zu der Trennstelle 16, d.h. der Mitte des Grundteils 12 befinden, während zwei weitere im Bereich der Seitenkanten des Grundteils 12 nahe des Preßerzeugnisses 20, ebenfalls symmetrisch zur Trennstelle 16 angeordnet sind. Insgesamt definieren die beiden der Rolle 18 zugelegenen und je einer der beiden verbleibenden Drehkörper 22 jeweils einen Punkt eines symmetrischen Dreiecks. Die Drehkörper 22 sind dazu bestimmt, die Seitenteile 14 von dem Grundteil 12 anzuheben und sie zu den seitlichen Kanten des Grundteils 12 zu verschieben, die auf dem Weg dorthin zusammengeschoben werden und im Randbereich von wenigen Zentimetern einen Wulst 24 bilden. Je nach der Strapazierfähigkeit der Bedeckung 10 kann es erforderlich werden, auch mehr als vier Drehkörper 22 vorzusehen. Zum anderen ist auch möglich, nur mit den beiden der Preßkammer 28 zugelegenen Drehkörpern 22 auszukommen.

Eine vorteilhafte Vorrichtung 26 zum Zuführen der Bedeckung 10 in eine Preßkammer 28 und zum Ausfalten der Seitenteile 14 ist in Figur 3 wiedergegeben. Diese Vorrichtung ist an eine nur teilweise dargestellte Maschine 30 angebaut und setzt sich im wesentlichen aus einem Rahmen 32, der Rolle 18, einer Umlenkrolle 34, einer Bremsrolle 35, den Drehkörpern 22 und einer Starterwalze 36 zusammen. Handelt es sich, wie bei diesem Ausführungsbeispiel, bei der Maschine 30 um eine Rundballenpresse, dann kann die Vorrichtung 26 unterhalb einer nicht dargestellten Anhängedeichsel oder an jeder anderen möglichen Stelle, die eine Zuführung der Bedeckung 10 in die Preßkammer 28 zuläßt, angebracht sein. In diesem Anwendungsfall ist es auch denkbar, daß die Vorrichtung 26 in eine bereits angebaute Folien- oder Netzbindungsanlage integriert wird.

Die Maschine 30 enthält zwei Seitenwände 38, die zwischen sich die Preßkammer 28 definieren und zwischen denen sich mehrere Preßwalzen 40, von denen nur zwei dargestellt sind, erstrecken.

Der Rahmen 32 besteht aus einem oberen Rechteckrahmen 42 und zwei an diesem befestigten Tragwinkeln 44 mit jeweils einem sich von diesem senkrecht nach unten erstreckenden ersten Schenkel 46 und einem parallel zu dem Rechteckrahmen 42 und an den Schenkel 46 angebrachten zweiten Schenkel 48. Von der Seite gesehen stellt der Rahmen 32 ein zweifach gegensinnig gekröpftes Gebilde dar.

Der Rechteckrahmen 42 ist in seinen der Preßkammer 28 zugelegenen inneren Eckbereichen mit einem Knotenblech 50 versehen, von denen jedes eine nicht ersichtliche Bohrung enthält, durch die jeweils eine Schraube 52 gesteckt ist. An seinem rückwärtigen, d. h. ebenfalls dem der Preßkammer 28 zugelegenen Endbereich ist der Rechteckrahmen 42 an den Seitenwänden 38 aufgehängt, was im Detail der Einfachheit wegen nicht dargestellt ist.

Der Rechteckrahmen 42 enthält zwei quer verlaufende Streben 54, 55, wobei die eine nahe der Preßkammer 28 angeordnet ist und die andere sich nahe der Rolle 18 befindet. In die Strebe 54 sind nahe ihrer in Querrichtung gesehenen Mitte zwei weitere nicht ersichtliche Bohrungen eingearbeitet, die ebenfalls der Aufnahme von Schrauben 52 dienen.

Die Tragwinkel 44 weisen in ihren inneren Eckbereichen zwischen den Schenkeln 46 und 48 Knotenbleche 56 auf, die von einer nicht gezeigten Bohrung durchdrungen sind, die der Aufnahme einer Welle 58 zum Tragen der Umlenkrolle 34 dienen.

Der zweite Schenkel 48 ist an seinem dem ersten Schenkel 46 abgewandten Endbereich mit Laschen 60 versehen, die sich in einer Ebene quer zu seiner Längsachse erstrecken und die zwischen sich jeweils einen Zapfen 62 der Rolle 18 drehbar in sich aufnehmen. Zur Sicherung der Zapfen 62 ist jeweils ein Bolzen 64 vorgesehen. Die Länge des zweiten Schenkels 48 richtet sich nach dem maximal zu erwartenden Durchmesser der Rolle 18.

Die Rolle 18 ist derart angeordnet, daß sich ihre untere Mantellinie mit der abzurollenden Bedeckung 10 stets unterhalb der oberen Mantellinie der Umlenkrolle 34 befindet.

Die Drehkörper 22 erstrecken sich mit ihrer Drehachse konzentrisch zu der Längsachse der Bohrungen für die Schrauben 52 und werden von letzteren drehbar gehalten. Innerhalb der Drehkörper 22 sind nicht gezeigte Lager vorgesehen, die eine leichtgängige Drehbewegung der Drehkörper 22 um die Schrauben 52 ermöglichen. Die Länge der grundsätzlich gleichlangen Drehkörper 22 ist so bemessen, daß sie geringfügig bis unterhalb der oberen Mantellinie der Umlenkrolle 34 reichen. Die zwar einstückig ausgebildeten Drehkörper 22 lassen sich in einen Fußteil 66 mit einem großen Außendurchmesser und einen darauf stehenden Ständer 68 mit einem kleinen Außendurchmesser unterteilen, die mit einem großen Radius allmählich ineinander übergehen. Der Fußteil 66 befindet sich an dem dem Rechteckrahmen 42 abgelegenen Ende des Drehkörpers 22 und ist abgerundet, um keine Beschädigung der Bedeckung 10 hervorzurufen. Unter Umständen kann es vorteilhaft erscheinen, die Drehkörper 22 anstatt senkrecht zu dem Grundteil 12 der Bedeckung 10 zu diesem geringfügig geneigt anzuordnen.

Die Bremsrolle 35 ist auf einer Welle 37 gelagert, die in federbelasteten Trägern 39 aufgenommen wird und sich quer zur Fortbewegungsrichtung der Bedeckung 10 unterhalb der Strebe 55 erstreckt. Die Träger 39 erstrecken sich vertikal beweglich durch an dem Rechteckrahmen 42 angebrachte Laschen 41 und werden von jeweils einer Feder 43 mit der Bremsrolle 35 an die Unterseite des Rechteckrahmens 42 herangezogen, um die später zwischen die Bremsrolle 35 und den Rechteckrahmen 42 geführte Bedeckung 10 festzuhalten.

Die Starterwalze 36 ist in einem sich zwischen zwei Preßwalzen 40 ergebenden Spalt 70 untergebracht und auf einer Welle 72, die sich durch jeweils ein Langloch 74 in jeder der Seitenwände 38 erstreckt, gelagert. Die Endbereiche der Welle 72 werden jeweils in einem Kopf 76 eines Hydraulikkolbens 78 getragen, der in Abhängigkeit von einem von einer nicht gezeigten Steuereinrichtung ausgehenden Steuersignal aus- und eingefahren werden kann. Der Hydraulikkolben 78 ist in einem an der Seitenwand 38 aufgehängten Hydraulikzylinder 80 geführt. Es ist auch möglich, Hydraulikzylinder und -kolben 80 und 78 durch einen Elektromotor zu ersetzen. Der Hydraulikkolben 78 bewirkt im ausgefahrenen Zustand, daß die Starterwalze 36 auf die in diesem Ausführungsbeispiel darunter angeordnete Preßwalze 40 zubewegt und an diese angedrückt wird. Der Anpreßdruck der Starterwalze 36 ist so gewählt, daß die Bedeckung 10 dennoch zwischen ihr und der Preßwalze 40 hindurch gezogen werden kann, wenn sie von dem Preßerzeugnis 20 erfaßt und in die Preßkammer 28 eingezogen wird. Erforderlichenfalls kann auch die Starterwalze 36 wieder von der Preßwalze 40 angehoben werden, nachdem die Bedeckung 10 in die Preßkammer 28 eingezogen worden ist.

Zwischen der Starterwalze 36 und der Preßkammer 28 und parallel zu deren Längsachsen erstreckt sich eine Trenneinrichtung 82, die aus einem beweglichen Messer, einer absenkbaren Messerleiste oder dergleichen bestehen kann. Die Trenneinrichtung 82 dient lediglich dem Abtrennen des Teils der auf der Rolle 18 aufgewickelten Bedeckung 10, der benötigt wird, das Preßerzeugnis 20 zu umhüllen. Derartige Trenneinrichtungen 82 sind an sich bekannt.

Auf die Trenneinrichtung 82 in dieser Art kann dann verzichtet werden, wenn die Bedeckung 10 in bestimmten Abständen perforiert ist, wobei die Abstände vorzugsweise dem Umfang des Preßerzeugnisses entsprechen, so daß durch eine entsprechende Anpressung der Starterwalze an die Preßwalze 40 und beim Versuch des in der Preßkammer 28 bewegten Preßerzeugnisses 20 die Bedeckung 10 noch weiter einzuziehen, diese abgerissen wird.

Anstatt der auf der Rolle 18 angeordneten Bedeckung 10 an einem Stück, können auch eine Vielzahl von Bedeckungen 10 in vorgefertigter Länge in einem Behälter geschichtet sein, so daß sich ein Abtrennen nach dem Umhüllungsvorgang erübrigt.

Die Bedeckung 10 wird wie folgt in die Vorrichtung 26 eingelegt, wobei davonausgegangen wird, daß sie auf die Rolle 18 aufgewickelt ist, und zwar derart, daß die Seitenteile 14 dem Kern der Rolle 18 immer näher sind als der dazugehörige Grundteil 12.

Die mit der Bedeckung 10 bewickelte Rolle 18 wird mittels der Zapfen 62 zwischen die Laschen 60 auf den zweiten Schenkeln 48 eingelegt und mittels der Bolzen 64 gesichert. Bei diesem Ausführungsbeispiel ist darauf zu achten, daß die Rolle 18 so eingelegt wird, daß beim Abziehen der Bedeckung 10 von der Rolle 18 die Seitenteile 14 nach oben zeigen, was bedeutet, daß die Bedeckung 10 tangential von der unteren Mantellinie weggezogen wird. Anschließend wird die Bedeckung 10 durch den Spalt zwischen der Rolle 18 und der Umlenkrolle 34 geführt und über deren oberen Mantelabschnitt gezogen. Daraufhin wird sie zwischen die Bremsrolle 35 und die rückwärtige Strebe 55 bis in den Spalt 70 zwischen der Starterwalze 36 und der darunterliegenden Preßwalze 40 gezogen. Schließlich werden die Seitenteile 14 von dem Grundteil 12 abgezogen und soweit nach außen gezogen, bis sie auf die Oberseite der Fußteile 66 der Drehkörper 22 geschoben werden können. Dieser letzte Vorgang muß allerdings nur dann ausgeführt werden, wenn eine neue Rolle 18 aufgelegt wird, da ansonsten die zur Außenseite hin geschobenen Seitenteile 14 jeweils auf den Oberseiten der Drehteile 22 verbleiben und von diesen auch bei Erschütterungen aufgrund der Wirkung der Bremsrolle 35 nicht wegrutschen können.

Die Maschine 30 ist nunmehr für den ersten Umhüllungsvorgang einsatzbereit.

Für die Dauer des daraufhin durchgeführten Preßvorgangs in der Preßkammer 28 ist der Hydraulikzylinder 80 drucklos und der Hydraulikkolben 78 eingefahren, so daß die Starterwalze 36 wirkungslos bleibt, obwohl die unterhalb von ihr liegende Preßwalze 40 angetrieben wird. Die Bedeckung 10 bleibt mit ihrem Endbereich allerdings in dem Spalt 70, da sie von der Bremsrolle 35 festgehalten wird. Ist die Preßkammer 28 am Ende des Preßvorgangs gefüllt und soll das in ihr verdichtete Preßerzeugnis 20 mit der Bedeckung 10 umhüllt werden, dann wird mittels der nicht gezeigten Steuer vorrichtung an dem Hydraulikzylinder 80 ein Druck angelegt, so daß der Hydraulikkolben 78 ausfährt und die Starterwalze 36 auf die Preßwalze 40 zubewegt, bis schließlich die Bedeckung 10 fest dazwischen ergriffen wird. Sobald die Preßwalze 40 sowohl die Starterwalze 36 dreht als auch die Bedeckung 10 mitzieht, wird die Bedeckung 10 von der Rolle 18 abgezogen, wobei kontinuierlich die Seitenteile 14 nach außen gedrängt und zu einem Wulst 24 geformt werden, der sowohl von der Bremsrolle 35 als auch von der Starterwalze 36 flachgedrückt wird und mit dem sich drehenden Preßerzeugnis 20 in die Preßkammer 28 hineingezogen wird. Auf ein weiteres Steuersignal hin wird die Trenneinrichtung 82 betätigt und die Starterwalze 36 wieder von der Preßwalze 40 abgehoben, so daß die Bedeckung 10 nicht mehr von der Rolle 18 abgezogen wird, aber aufgrund der Bremsrolle 35 in dem Spalt zwischen der Starterwalze 36 und der Preßwalze 40 gehalten wird.

Der Zeitpunkt, wann das zweite Steuersignal gegeben wird, ist abhängig von der Anzahl der gewünschten Umwicklungen und daher entweder von einer Bedienungsperson zu bestimmen oder von einer weiteren Steuervorrichtung anhand bestimmter Parameter zu ermitteln.

Nachdem das Preßerzeugnis 20 umwickelt worden ist, kann es aus der Preßkammer 28 ausgestoßen werden. Abhängig davon, um welches Material es sich bei der Bedeckung 10 handelt und welches Gut für ein Preßerzeugnis 20 verwendet wird, kann es sein, daß die Bedeckung 10 von sich aus auf dem Preßerzeugnis 20 auch noch nach dem Verlassen der Preßkammer 28 auf dem Preßerzeugnis 20 haftet, oder auch, daß es eigens befestigt werden muß. Für eine zusätzliche Befestigung ist es möglich, bekannte Techniken, wie die Verwendung von Klettverschlüssen oder Selbstklebestreifen, die in bestimmen Abständen auf dem Grundteil 12 von vornherein befestigt sind, heranzuziehen.

Sobald das Preßerzeugnis 20 die Preßkammer 28 verlassen hat, kann von einer einzigen Person, ohne daß das Preßerzeugnis 20 angehoben werden muß, der aus den Seitenteilen 14 gebildete Wulst 24 zwischen den Lagen der Bedeckung 10 um das Preßerzeugnis 20 und dem Preßerzeugnis 20 herausgezogen und die Seitenteile 14 an ihren Endbereichen miteinander verbunden werden. Weisen die Seitenteile 14 eine große Überlappung auf, bietet es sich an, diese wie den oberen Teil eines Sackes zusammenzufassen und mit einer Schnur oder dergleichen zu binden. Andernfalls können die Seitenkanten der Seitenteile 14 mit Klebstreifen verbunden und somit die Bedeckung 10 geschlossen werden. In einer besonderen und sehr vorteilhaften Ausführungsform sind die Seitenbereiche der Seitenteile 14 mit selbstklebenden oder selbsthaftenden Streifen mit einer Schutzfolie versehen, nach deren Abziehen die Seitenteile 14 aufeinander geklebt werden können. Ob die Abschlußkante des Grundteils 12 ebenfalls auf dem darunter liegenden Grundteil 12 befestigt werden muß, ist abhängig von der Anzahl der Umwicklungen und der Art der Forderung, inwieweit die Bedeckung 10 geschlossen sein muß. Aber auch hierzu können die vorgenannten Verbindungsmittel verwendet werden.

Zum besseren Verständnis ist in Figur 4 ein Querschnitt durch ein Preßerzeugnis 20, in diesem Fall ein Rundballen einer Rundballenpresse, mit einer darauf gewickelten Bedeckung 10 dargestellt, und zwar in ausgezogenen Linien in dem Zustand wie das Preßerzeugnis 20 die Preßkammer 28 verläßt und in gestrichelten Linien, wenn die Seitenteile 14 miteinander verbunden werden.

## Ansprüche

1. Verfahren zum Umhüllen eines in einer mindestens einseitig offenen Preßkammer (28) gefertigten Preßerzeugnisses (20), insbesondere eines in einer Rechteck-oder einer Rundballenpresse gefertigten Erntegutballens, mit einer Bedeckung (10), dadurch gekennzeichnet, daß die in der Größe mindestens der Mantel- und den Stirnflächen entsprechende Bedeckung (10) auf die Breite der Mantelfläche gefaltet, der Preßkammer (28) zugeführt und um das Preßerzeugnis (20) gewickelt wird, daß der eingefaltete Seitenteil (14) der Bedekkung (10) nach dem Austritt des Preßerzeugnisses (20) aus der Preßkammer (28) in die Richtung der nicht bedeckten Seiten des Preßerzeugnisses (20) geführt und die Bedeckung (10) geschlossen wird.

2. Bedeckung zur Anwendung in einem Verfahren nach Anspruch 1, dadurch gekennzeichnet, daß

a) die Bedeckung (10) ausreichend lang ist, um die Mantelfläche des Preßerzeugnisses (20) zu bedekken,

b) die Bedeckung (10) ausreichend breit ist, um die Mantelfläche sowie die beiden Stirnflächen zu bedecken und

c) der jeweils einer Stirnfläche entsprechende Seitenteil (14) der Bedeckung (10) auf den der Mantelfläche entsprechenden Grundteil (12) umgeschlagen wird.

3. Bedeckung nach Anspruch 2, dadurch gekennzeichnet, daß sie im Bereich ihrer Kanten selbsthaftende Verbindungsmittel aufweist.

4. Bedeckung nach Anspruch 2, dadurch gekennzeichnet, daß sie aus einer luftdichten Folie besteht.

5. Vorrichtung zum Ausfalten und Leiten der Bedeckung (10) in die Preßkammer (28) gemäß dem Verfahren nach Anspruch 1, gekennzeichnet durch eine Vorratseinrichtung für eine oder mehrere Bedeckungen (10) und eine Entfaltungseinrichtung zum Verschieben der eingefalteten Seitenteile (14) der Bedeckung (10) an den Rand des der Mantelfläche entsprechenden Grundteils (12).

6. Vorrichtung nach Anspruch 5, dadurch gekennzeichnet, daß die Vorratseinrichtung eine Rolle (18), auf die mehrere Bedeckungen (10) aufgewikkelt sind, oder ein Behältnis enthält, in dem mehrere Bedeckungen (10) gelagert sind.

7. Vorrichtung nach Anspruch 5, dadurch gekennzeichnet, daß die Entfaltungseinrichtung Drehkörper (22) enthält, die im Bereich des Eintritts zur Preßkammer (28) nahe den Kanten der seitlichen Begrenzung der Preßkammer (28) angeordnet sind.

8. Vorrichtung nach Anspruch 6 und 7, dadurch gekennzeichnet, daß weitere Drehkörper (22) im Bereich der Rolle (18) und der Innenkanten der eingeschlagenen, den Stirnseiten zugeordneten Seitenteilen (14) der Bedeckung (10) gelegen sind.

9. Maschine zum Durchführen des Verfahrens nach Anspruch 1, insbesondere Rundballenpresse, dadurch gekennzeichnet, daß eine Fördervorrichtung zum Einführen der Be deckung (10) in die Preßkammer (28) vorgesehen ist, die sich zwischen der Preßkammer (28) und den Drehkörpern (22) nach Anspruch 7 befindet.

10. Maschine nach Anspruch 9, dadurch gekennzeichnet, daß bei auf einer Rolle (18) aufgewickelten Bedeckungen (10) eine Trenneinrichtung (82) vorgesehen ist, die sich zwischen der Fördervorrichtung und der Preßkammer (28) erstreckt.

11. Fördervorrichtung gemäß Anspruch 8, dadurch gekennzeichnet, daß eine Starterwalze (36) vorgesehen ist, die die Bedeckung (10) in Abhängigkeit von einem Steuersignal an eine weitere angetriebene Preßwalze (40) anpreßt.

12. Fördervorrichtung nach Anspruch 11, dadurch gekennzeichnet, daß eine Bremsrolle (35) zum Aufbauen eines Bewegungswiderstands der Bedeckung (10) vorgesehen ist.

FIG.1

FIG.2

FIG.4

FIG.3

EP 0 314 923 A1

8427

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| A | FR-A-1463900 (C.N.E.E.M.A.) <br> * Seite 1; Figuren 1-3 * <br> --- | 1, 2, 4 | A01F15/08 <br> A01F25/14 <br> B65B63/02 |
| A | DE-A-2100153 (BÖHM) <br> * Seite 5 - 7; Figuren 1-5 * <br> --- | 1, 4 | B65B9/06 |
| A | US-A-3055576 (OTTINGER) <br> * Spalte 1, Zeile 62 - Spalte 3; Figuren 1-5 * <br> ----- | 1, 2, 3, 4 | |

RECHERCHIERTE
SACHGEBIETE (Int. Cl.4 )

A01F
B65B
B65D

Der vorliegende Recherchenbericht wurde für alle Patentansprüche erstellt

| Recherchenort | Abschlußdatum der Recherche | Prüfer |
|---|---|---|
| DEN HAAG | 31 JANUAR 1989 | VERMANDER R.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)